# EUROPEAN PATENT APPLICATION

(11) **EP 3 683 042 A1**
(43) Date of publication of application: **22.07.2020**
(21) Application number: 20151842.0
(22) Date of filing: 14.01.2020
(51) Int. Cl.: B32B 1/08, B32B 7/12, B32B 15/082, B32B 27/30, B32B 33/00, C09D 5/08, C23C 28/00, F16L 9/00, F16L 58/10

(54) **INTERNAL ANTICORROSIVE AND ABRASIVE RESISTANT PROTECTION COATING FOR PIPES**

(30) Priority: 15.01.2019 US 201916247638
(71) Applicant: Patagonia Shale Services S.A., Ciudad De Buenos Aires CP 1055 (AR)
(72) Inventor: ANDREANI, Adrian, CP 1429 Ciudad de Buenos Aires (AR); NORIEGA, Federico, CP 1062 Ciudad de Buenos Aires (AR)
(74) Representative: LLR

(57) **Abstract**

The present invention includes an inner anticorrosive and abrasive resistant coating (10) for metallic pipes (1) used for the transport of fluids. The coating includes: a layer of epoxy resin (2) having free hydroxyl groups, which are applied directly to the inside (1a) of the metallic pipe (1); a layer of thermoplastic adhesive (3) applied directly onto the layer of epoxy resin; and a layer of a plastic material (4) containing polyvinylidene fluoride or polyvinylidene difluoride (PVDF).

## Description

### FIELD OF THE INVENTION

The present invention is related to an internal anticorrosive and abrasive resistant protection coating for metallic pipes.

### BACKGROUND OF THE INVENTION

The world market offers a great variety of coating options to protect the inner surface of pipes used for the transport of fluids from the effects of corrosion and erosion. Some, additionally, exhibit features that allow the reduction of friction and turbulence, thus, increasing the efficiency of flow. Among the alternatives to anticorrosive coatings, one can find those based on liquid epoxy; the epoxy coating is adhered by fusion and the special anticorrosive paints.

Among the main features of these coatings, they exhibit adaptation to corrosive environments, resistance to various solvents and chemical products, as well as to cathodic detachment.

The research on inner coatings, along with the technical and metallurgic evolution required by pipes and accessories, has resulted in the development of coating that satisfies all kinds of needs.

A very common kind of coating is cement mortar lining, which fulfills the standards set forth in ISO 4179 and AWWA C104 for use in water distribution systems and sewerage systems. The ceramic epoxy coating for gravity-operated septic tanks and sewerage systems and the special inner coating for specific service conditions.

Inner cement lining is done by making the pipe rotate at high angular velocity coupled with vibration that produces a dense coating.

The high centrifugal speed allows the coating to become smooth, dense and perfectly compact.

The Hazen-Williams formula has determined that the coefficient of friction is 140 for cement linings and 150 for polyethylene and epoxy coatings.

Other anticorrosive and abrasive resistant protections include placing plastic liners inside the pipes. However, said liners are not adhered to the metal. They are simply attached at the ends of the pipe to avoid displacement.

Prior art shows a metallic pipe inner coating made of high-density consolidated polyethylene. Also, prior art shows a metallic pipe with an insulating inner coating and a fiber-filled thermoplastic liner placed inside a metallic pipe.

Besides, prior art shows an inner coating for pipes made up of a highly heat-resistant TPU-Polyester lining which allows a non-woven fabric to be saturated with an epoxy-amine resin and to be cured with steam or hot water.

There is a coating made up of a solixane-based elastomer processable by heat fusion, a coating made of a thermoplastic material, and a thermoplastic coating applied to the inside of the pipe by injecting gas that pushes the material against the inner surface of the pipe.

Even though all the known coatings in the field of technique yield the desired results for their specific purpose, the known coatings do not, unfortunately, include a plastic coating that can strongly adhere to pipes, so that it can withstand pressure drops of the magnitudes present in oil and gas production pipelines.

Nor does prior art show a coating that can make pipes impermeable to liquids and gases simultaneously.

In addition to solving the previous points, the proposed invention also shows a yet-inexistent procedure in the prior art, whereby a layer of adhesive thermoplastic is applied between an epoxy adhesive and material of the plastic pipe, so as to achieve a full adherence of the various components and metallic of the metal pipe.

Finally, neither is there in the state of the art, nor does the invention describe, a procedure that includes a step whereby a plastic pipe is pressed against the surface of the metallic pipe, while simultaneously applying heat at a temperature higher than the point of softening of the thermoplastic material, but without damaging the material.

### SUMMARY OF INVENTION

It is an object of the present invention to have a thermoplastic coating that adheres to the inside of pipes with such strength that it will counteract the strength of pressure drops present in oil and gas production pipelines.

It is another object of the revealed procedure that the inner coating of the metallic pipe is impermeable to the transported liquids and gases.

It is another object of the present invention to provide a layer of thermoplastic adhesive between the epoxy layer and the material of the plastic pipe.

It is also an object of the present documentation to have a procedure including the steps to press the plastic pipe against the wall of the metal pipe while simultaneously applying temperature.

Finally, it is an object of this invention to have a metallic pipe lined with an inner plastic pipe, and between said pipes there is a layer of adhesive and a layer of epoxy.

The present invention includes an anticorrosive and abrasive resistant inner coating for metallic pipes used to transport fluids. The coating includes: a layer of epoxy resin having free hydroxyl groups, which is applied directly to the inside wall of the metallic pipe; a layer of thermoplastic adhesive applied directly onto the layer of epoxy resin, the thermoplastic adhesive is anhydride modified polyolefin or acrylic acid modified polyolefin; and a layer of a polyvinylidene fluoride or polyvinylidene difluoride (PVDF) as a thermoplastic material directly applied onto the adhesive layer.

### BRIEF DESCRIPTION OF DRAWINGS

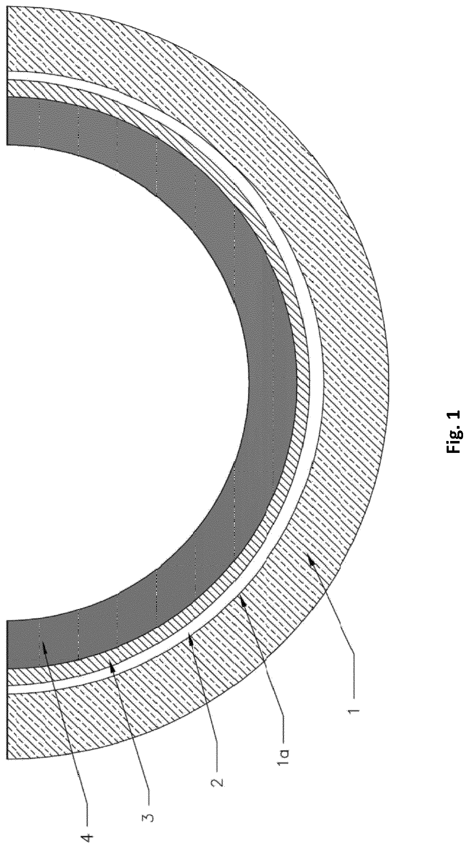

Figure 1 illustrates a cross section of the metallic pipe (1), which includes the coating as described in the present invention.

### DETAILED DESCRIPTION OF THE INVENTION

With the aim to make the present invention comprehensible so that it can be applied easily, a precise description of the preferred method for manufacturing will be presented in the following paragraphs. Said description includes a diagram illustrating the invention. Said description and diagram cannot be regarded in any way as limiting the invention. The components mentioned in the description can be selected among various equivalents, but without deviating from the principles of the invention set forth in the current documentation.

In the case described in the present documentation, it protects the metallic pipe with a three-layer coating, which includes an epoxy resin and a plastic material with an in-between layer made up of an adhesive, which allows said three layers to bond and fuse with each other and the metallic pipe.

Each of the component layers exhibits features that taken together afford a much superior protection compared to that of solutions in the prior art.

The present invention includes an inner anticorrosive and abrasive resistant coating for metallic pipes used for the transport of fluids. The coating includes:
a layer of epoxy resin having free hydroxyl groups, which is applied directly to the inside of the metallic pipe;
a layer of thermoplastic adhesive applied directly onto the layer of epoxy resin, the thermoplastic adhesive is anhydride modified polyolefin or acrylic acid modified polyolefin; and
a layer of polyvinylidene fluoride or polyvinylidene difluoride (PVDF) as a thermoplastic material directly applied onto the adhesive layer.

### Epoxy Resin

The epoxy resin used in the present invention may be any resin that contains free hydroxyl groups.

The epoxy resin having free hydroxyl groups adheres to the metallic surface because of the chemical bonds formed through electron sharing by groups on the substrate and the free hydroxyl groups of the epoxy resin, the curing is accompanied by polarity change.

It will be understood that the curing phenomenon of epoxy resin compositions involves chemical linking between polymer chains and that this linking (or "crosslinking") mechanism is initiated almost immediately upon application of the epoxy resin upon a hot surface and continues as the epoxy resin composition melts, coalesces and gels.

Examples of preferred epoxy resins having free hydroxyl groups useful in the present invention are Epoxy, Phenolic Epoxy, Polyurethane Epoxy, and/ or Novolac^{(R)}.

The thickness of the layer of epoxy resin is at least 30 microns, preferably between 30 and 250 microns.

### Thermoplastic Adhesive

In the preferred method for manufacturing described in the present documentation, the adhesive (3) is of the thermoplastic type and it allows a chemical bond with the epoxy of the first layer (2), so as to obtain full adherence to the metal.

The thermoplastic adhesive used in the present invention may be Anhydride modified polyolefin or acrylic acid modified polyolefin, since the epoxy resins have free hydroxyl groups anhydride or acrylic acid adhesive that can react to form very strong bonds to the epoxy.

Epoxy resin combines very low permeability to oxygen with excellent adhesion to properly prepare metallic surfaces and excellent resistance to cathodic disbondment. However, it is permeable to moisture, and is easily damaged by mechanical impacts. It is therefore beneficial to cover the epoxy resin with a layer of a polymer that is highly resistant to moisture permeation and resistant to impact damage.

Polyolefin coatings are widely used to protect metal pipelines, especially oil and gas pipelines, from both corrosion and mechanical damage. Unfortunately, the actual thermoplastic internal coating or polyolefins liners are not bonded to epoxy resin. The present invention uses modified polyolefins that contain polar groups to bond to the epoxy resin layer.

It is to be understood that the term "modified polyolefin", as used in the present invention, includes not only a polyolefin that is modified with an unsaturated carboxylic acid or an anhydride thereof, that is, a polyolefin copolymerized with the unsaturated carboxylic acid or the anhydride thereof, but also includes a blend of a polyolefin modified with the unsaturated carboxylic acid or anhydride thereof and an unmodified polyolefin.

The epoxy resin free hydroxyl-groups and the carboxylic acid dimer hydrogen bonding produces an epoxy resin-anhydride system. The gelation phase of reaction exhibits rapid initial hydroxyl-anhydride reactions.

The acid or anhydride modified polyolefins of the invention are, in most cases, acid or anhydride modified polyethylenes, polypropylenes, or combinations thereof. Most preferably the polyolefins of the invention are acid or anhydride modified polypropylenes, acid or anhydride modified polypropylene derivatives, or mixtures of these. The acid or anhydride modified polyolefin component of the invention may also be mixtures of acid or anhydride modified polyolefins with unmodified polyolefins. Preferably, if the emulsion comprises several polyolefins, most of the polyolefins have grafted thereto at least one acid or anhydride. The acids or anhydrides grafted on the polyolefins may be, in particular, ethylene-substituted carboxylic acids and/or polycarboxylic acids and/or acid anhydrides, such as, for example, maleic, acrylic, methacrylic, itaconic or citraconic acid (or anhydride). Most preferably the acid or anhydride modified polyolefins of the invention are maleic anhydride modified polypropylenes.

Examples of preferred acid or anhydride modified polyolefin dispersions useful in the present invention are maleic anhydride grafted polypropylene dispersions such as Hydrosize XM- 10075, Hydrosize PP2-01, Hydrosize PPI-OI (all from Hydrosize Technologies, Inc., Raleigh, NC) and Michem Emulsion 91735 (available from Michelman, Inc., Cincinnati, OH).

The thickness of the layer of the adhesive is at least 50 microns, preferably between 50 and 300.

### Polvvinvlidene fluoride or polvvinvlidene difluoride (PVDF)

Onto the layer of thermoplastic adhesive (3) a layer of plastic material is applied. This makes up the inner protection, which is very effective against abrasion and corrosion caused by fluids transported through metallic pipes (1).

The plastic material is made of polyvinylidene fluoride or polyvinylidene difluoride (**PVDF**). PVDF is a semi-crystalline, high purity thermoplastic fluoropolymer having a chemical formula. 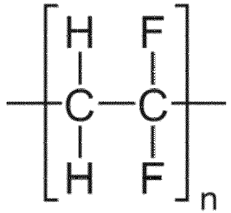 and structural formula:

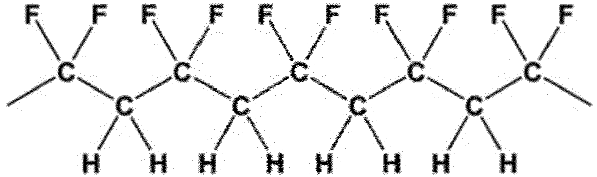

The polyvinylidene fluoride or polyvinylidene difluoride (PVDF) is fused plastically with the adhesive of the layer of thermoplastic material (3) and the layer of epoxy resin (2) achieving complete adhesion to the metal.

Polyvinylidene fluoride (PVDF) withstands exposure to harsh thermal, chemical, or ultraviolet conditions. The insolubility and electrical properties result from the polarity of alternating CH2 and CF2 groups on the polymer chain. PVDF may be used at temperatures from -80 to 300°F.

PVDF has:
low weight;
low thermal conductivity;
high chemical corrosion resistance;
heat resistance;
mechanical strength and toughness;
high abrasion resistance;
resistant to most chemicals and solvents;
low permeability to most gases and liquids;
withstands exposure to harsh thermal and chemical conditions; and
unaffected by long-term exposure to ultraviolet radiation.

PVDF is not affected by long-term exposure to sunlight and other sources of ultraviolet radiation. It retains its properties in high vacuum and gamma radiation and is resistant to most acids and alkalis.

The preferred PVDF resins are those having a molecular weight in the range of about 10,000 to 70,000, most preferably about 30,000 to 50,000, a melting temperature of about 155° to 175° C, a melt flow index (according to ASTM D 3418) of about 3 to 30g/10 min, most preferably about 5 to 10 g/10 min, and a melt viscosity (according to ASTM D 3835) of about 6,000 to 12,000 Poise (P) at 230° C, most preferably about 7,000 to 10,000 P. Coatings made from PVDF resins with molecular weights lower than about 10,000 have poorer mechanical properties. On the other hand, powders made from PVDF resins having a molecular weight greater than about 70,000 remain excessively viscous during the heat treatment.

Basically, the chains of the thermoplastic adhesive and the PVDF merge plastically when they reach the melting temperature producing a complete diffusion of the polymer chains, creating a fully united layer.

The thickness of the layer of the PVDF layer is between 1 mm to 8mm.

The advantage of the above system lies in the fact that the epoxy coating provides good adhesion to the metallic surface, corrosion protection; high cathodic disbound resistance and excellent barrier to gases to the underlying metallic pipeline, and the PVDF layer provides excellent abrasion; impermeability to liquids, and impact resistance and acts as a complete barrier to the underlying pipe surface.

The PVDF layer, once it has cured, provides a tough, flexible and impermeable protective coating.

The epoxy resin layer (2) is applied onto the inner surface (1a) of the metallic pipe (1). Once the pipe has been burned (1) and later cleaned (abrasive blasting) with an abrasive material, so as to eliminate contaminants, the inside surface (1a) of the pipe (1) will be clean and ready for the epoxy resin (2) to be applied.

Before applying the epoxy resin (2), the metallic pipe (1) will be burned. In the burn-off **step,** the temperature must be controlled so as not to alter the metallographic conditions of the metallic pipe (1). For this reason, the burn-off temperature must not exceed 350°C. This temperature will easily eliminate oils, grease, and fuel residues that might be covering inside of the metallic pipe (1). On the other hand, the applied temperature must not be lower than 100°C, since below that level the desired burn-off will not be achieved.

The abrasive blasting **step** seeks to prepare the inner surface of the metallic pipe (1) by complementing the burn-off described in the previous **step** and, thus, improving the adherence of the epoxy resin (2). In the preferred method for manufacturing described, the abrasive blasting is done with noncontaminating material, preferably using O₂Al₃ grit.

Then comes a heating step, whereby the pipe (1) is heated at a temperature of between 120°C and 180°C, since this temperature improves the curing of the epoxy resin (2), which is applied at a later step before it completes its polymerization. In the preferred method for manufacturing in the present documentation, in the step where the metallic pipe is heated, the heat is applied onto the exterior surface of said metallic pipe (1).

The next **step** involves applying a layer of epoxy resin on the inner surface (1a) of the metallic pipe (1). The epoxy resin can be applied in liquid, granular, or powder form.

Then a layer of thermoplastic adhesive (3) is applied directly onto the layer of the epoxy resin (2), while raising the temperature of the metallic pipe, thus, achieving a chemical bond between said epoxy resin layer (2) and the thermoplastic adhesive layer (3). This makes the adhesive (3) come into close contact with the epoxy resin (2). Hence, in the **step** where the temperature is raised, said epoxy resin (2) will be cured. The polymerization of the epoxy resin (2) and the fusion of the adhesive (3), which result from the step where the temperature is raised to ensure a very strong chemical coupling, due to union of the carboxyl groups and the epoxy groups. As in the previous heating step, in the step where the temperature is raised, the metallic pipe (1) is heated from the outside, so that in both cases the temperature reaches the inner surface (1a) of said metallic pipe (1) by conduction.

The temperature at which the metallic pipe (1) is heated in the heating **step** depends on the thickness and diameter of the metallic pipe (1). Of course, it is closely related to the composition and the temperature of the product that will be transported.

In the preferred method described in the present documentation, the temperature at which the metallic pipe is heated ranges between 180°C and 350°C.

The layer (4) containing PVDF is pressed against the layer of thermoplastic adhesive by injecting a fluid (gaseous or liquid) at high pressure into the pipe, while the metallic pipe (1) is heated from the outside, thus, achieving the fusion between said adhesive and said plastic.

To determine the level of adherence to the metal, the inventors have conducted several trials following the CSA Standard Z 245.21-06 (Canadian Standard Association), Peel Adhesion (hanging mass) for System B1 : >15.3 Kg/25 mm, 20°C.

The level of adherence obtained is higher than 15.3 Kg/25 mm at a temperature of 50°C.

Through the tests conducted, it is determined that the set of three layers on the inner surface of the metallic pipe (1) can withstand sharp pressure drops at temperatures ranging from -30°C to 110°C, in accordance to the prescribed values in the autoclave trial defined in the NACE TM0185 specification.

In compliance with the specification, it is subjected, during 20 days, to pressures of up to 273 atm and temperatures of up to 110°C. The fluids used in the trial were kerosene, toluene, and formation water with 12% CINa and gaseous phase CO₂.

Above, this document describes one possible method to produce the invention and the way the invention works. Additionally, this documentation is supplemented with a summary of the invention contained in the claims that are added below.

## Claims

1. An inner coating (10) providing anticorrosive and abrasive resistant protection for metallic pipes (1) used for the transport of fluids, the coating includes:
a layer of epoxy resin having free hydroxyl groups (2) applied directly onto the inner surface (1a) of the metallic pipe (1);
a layer of thermoplastic adhesive (3) applied directly onto the layer of epoxy resin, the thermoplastic adhesive is anhydride modified polyolefin or acrylic acid modified polyolefin; and
a layer (4) of polyvinylidene fluoride or polyvinylidene difluoride (PVDF) as a thermoplastic material directly applied onto the adhesive layer.

2. The coating of claim 1, wherein the coating has a level of adherence higher than 15.3 Kg/25 mm at a temperature of 20°C.

3. The coating of claim 1, wherein it withstands sharp pressure drops at temperatures ranging from 30°C below zero to 110°C.

4. An internally lined metallic pipe with an inner coating providing anticorrosion and abrasive resistant protection of the pipe, the coating includes:
a layer of epoxy resin having free hydroxyl groups (2) applied directly onto the inner surface (1a) of the metallic pipe (1);
a layer of thermoplastic adhesive (3) applied directly onto the layer of epoxy resin, the thermoplastic adhesive is anhydride modified polyolefin or acrylic acid modified polyolefin; and
a layer of polyvinylidene fluoride or polyvinylidene difluoride (PVDF) as a thermoplastic material directly applied onto the adhesive layer.

5. A method to apply an anticorrosive and abrasive resistant inner coating to a pipe, the method comprising the steps of:
burning the pipe to a temperature between 100°C to 350°C;
cleaning an inner surface (1a) of the pipe by using abrasive blasting;
heating an exterior surface of the pipe to a temperature of between 120°C and 180°C;
applying while heating an epoxy resin layer (2) onto the inner surface (1a) of the pipe (1);
applying a layer of thermoplastic adhesive (3) directly onto the epoxy resin layer (2) while continuing heating the exterior surface of the pipe; and
pressing against the layer of thermoplastic adhesive, while continuing heating the exterior surface of the pipe, a layer (4) containing polyvinylidene fluoride or polyvinylidene difluoride (PVDF).
